# FASCICULE DE BREVET EUROPEEN

(11) **EP 3 755 138 B1**
(45) Date de publication et mention de la délivrance du brevet: **08.03.2023**
(21) Numéro de dépôt: 19711964.7
(22) Date de dépôt: 19.02.2019
(51) Int. Cl.: A01D 34/00, A01D 34/835, G06K 15/00

(54) **PROCEDE POUR REPRODUIRE UN MOTIF A MARQUER SUR UNE ZONE ENGAZONNEE**
VERFAHREN ZUR WIEDERGABE EINES MUSTERS, DAS AUF EINEM GRASBEREICH MARKIERT WERDEN SOLL
METHOD FOR REPRODUCING A PATTERN TO BE MARKED ON A GRASSED AREA

(30) Priorité: 21.02.2018 FR 1851474
(43) Date de publication de la demande: 30.12.2020
(73) Titulaire: Natural Grass, 75017 Paris (FR)
(72) Inventeur: PICARD, Bertrand, 75017 Paris (FR); PICARD, Edmond-Pierre, 91910 Saint Sulpice de Favières (FR)
(74) Mandataire: Loyer & Abello
(86) Numéro de dépôt international: PCT/FR2019/050374
(87) Numéro de publication internationale: WO 2019/162609

(56) Documents cités:
- WO-A1-2016/160931
- FR-A1- 2 785 230
- US-A- 5 681 129
- US-A1- 2011 166 705
- US-A1- 2012 158 236
- US-A1- 2016 150 739

## Description

La présente invention est relative à un procédé pour reproduire une image sur une zone engazonnée, telle qu'un terrain de sport en gazon naturel dans un stade, un hippodrome, un golf, etc.

Pour réaliser de tels marquages sur une zone engazonnée, il existe déjà des procédés et des appareils.

Ainsi, dans le document WO-200228541-A est décrit un appareil mobile comportant une tête de marquage munie de buses et de moyens électroniques qui commandent ces buses en fonction de la position à un instant donné de cet appareil mobile, conformément au motif à reproduire. La position du véhicule sur la surface est suivie, et les buses commandées, par un système de positionnement global (GPS) après entrée des coordonnées des surfaces à marquer.

Un tel dispositif ne peut être mis en oeuvre que si les liaisons satellitaires avec le véhicule sont satisfaisantes. Or, ceci n'est pas le cas pour un véhicule disposé sur un terrain entouré de tribunes, ces dernières faisant obstacle au bon fonctionnement du GPS (« Global Positioning System » ou « géo-positionnement par satellite » en français).

Dans le document US-20120253613-A est décrit un procédé et un dispositif pour créer des effets visuels sur une zone engazonnée. Des images haute résolution sont marquées sur des pelouses et des champs en utilisant un système de positionnement global, un processeur pour générer le motif désiré qui est traduit en instructions d'impression, et un outil de modelage qui est utilisé pour générer des motifs détaillés et pour marquer ces motifs sur une pelouse, un champ naturel ou artificiel, ou plus généralement sur une zone engazonnée.

Ces procédés et dispositifs connus permettent la reproduction d'un motif sur une zone engazonnée approximativement plane ou apparaissant comme telle de loin, telle que la pelouse d'un stade. En revanche, avec ces procédés et dispositifs, un observateur placé dans le stade verra le motif sous un certain angle entraînant une distorsion de cette image. Il en sera de même dans le cas d'une caméra de télévision : l'image qui apparaîtra sera distordue et ne reflétera pas parfaitement le logo, la typographie, le dessin ou le motif souhaité.

De la même façon, la forme altimétrique z(x, y) de la surface engazonnée au niveau de la zone de marquage aura un effet de déformation de l'image plus ou moins important, qui peut être relativement marginal pour la forme d'une pelouse de stade (en toit, en monopente,...) mais qui peut être significative dans le cas d'un fairway de golf.

De plus, comme indiqué ci-dessus, l'utilisation d'un système GPS pour diriger le véhicule et commander les moyens de marquage, n'est pas envisageable pour des surfaces engazonnée entourées de tribunes comme les grands stades internationaux.

De plus, dans l'optique de motifs tels que des logos de marques à réaliser de manière répétée dans un grand nombre de stades potentiellement éloignés et différents les uns des autres, et de manière simultanée, dans le cadre d'une compétition sportive par exemple, il est nécessaire de permettre la réalisation de ces motifs de manière rapide, répétable, fiable et précise. Le motif doit ainsi être notamment réalisé au bon endroit sur la pelouse, à la bonne échelle, et de manière à prendre en compte les spécificités du stade (taille et pentes de la pelouse, emplacement des caméras, variétés végétales constituant le gazon, etc.) Or, les procédés et dispositifs connus ne permettent pas une telle réalisation de marquages de manière simple, rapide, fiable, automatisée et autonome. Il manque un procédé intégrant tous les moyens et étapes pour une telle réalisation de marquages, à commencer par la définition des paramètres nécessaires pour obtenir le même résultat visuel souhaité par les marques, de manière identique pour chaque match ou événement extra-sportif, et ce malgré les spécificités de chaque stade.

Il est connu une méthode utilisée à l'heure actuelle pour tenir compte simultanément de la distorsion due à la forme altimétrique du terrain et au point précis d'observation de l'image tout en faisant la bonne mise à l'échelle et le bon emplacement de l'image.

Ainsi, dans le document FR-2785230-A est décrit un procédé consistant à projeter l'image à reproduire sur la zone du sol sur laquelle est prévue la reproduction de cette image, au moyen d'un moyen de projection lumineuse positionné à l'emplacement exact du point d'observation prévu pour la caméra. L'avantage du procédé est que l'image projetée se déforme spontanément en anamorphose ; si cette image projetée était peinte sur le sol selon le même tracé, elle serait naturellement vue depuis le point d'observation avec la forme de l'image initialement projetée, du simple fait que les rayons de projection ou les rayons lumineux émis depuis l'image projetée ou marquée sur la pelouse suivent exactement les mêmes trajets rectilignes entre l'image projetée et la caméra ou le projecteur.

Ce procédé antérieur comprend aussi la matérialisation sur le sol des « contours caractéristiques » du motif, qui doivent ensuite servir de guides pour l'application de moyens de marquage. Or, ce procédé présente de fortes limites. Outre le fait qu'un tel procédé nécessite, préalablement au marquage une projection nocturne d'un tracé et le repérage sur le terrain de contours caractéristiques, s'il en existe, ce procédé ne donne surtout nullement les instructions de marquage en fonction de la position du véhicule : en effet, il permet seulement de suivre visuellement un tracé repéré par des guides positionnés sur le terrain, contrairement à la volonté selon l'invention d'automatiser le procédé en une seule étape en fonction d'une mesure en temps réel de la position du véhicule et indépendamment de son trajet.

La présente invention a, au contraire, pour objectif de fournir un procédé pour reproduire un motif sur une zone engazonnée au moyen d'un dispositif comprenant un véhicule muni de moyens de marquage, qui permette de commander ces moyens de marquage en fonction de la position du véhicule et non en imposant au véhicule de suivre visuellement un tracé préalablement réalisé ou des tracés préalablement réalisés sur le sol lors d'une projection nocturne de l'image.

Aussi, un des buts de la présente invention est-il de fournir un procédé pour reproduire un motif sur une zone engazonnée au moyen d'un dispositif comprenant un véhicule muni de moyens de marquage, qui permette de commander les moyens de marquage sans faire appel à un système de positionnement global. En option, ce procédé permettra aussi de guider ce véhicule.

Un autre but est de fournir un procédé permettant de compenser les distorsions optiques crées par la forme du terrain et l'emplacement des caméras, variables suivant le stade.

Ces buts, ainsi que d'autres qui apparaîtront par la suite, sont atteints par un procédé pour reproduire un motif à marquer sur une zone engazonnée de grande dimension à l'aide d'un véhicule comportant un ensemble de moyens de marquage, lequel procédé est, selon la présente invention, caractérisé par le fait qu'il comprend les étapes suivantes :
Définir un repère local orthonormé O ; Ox, Oy, Oz, les deux axes Ox, Oy étant dans le plan horizontal, l'axe Oz étant l'axe vertical et le point d'origine (O) étant situé sur ou à proximité de la zone engazonnée ;
Déterminer la taille prédéfinie dx, dy des cellules élémentaires selon respectivement le premier axe Ox et le deuxième axe Oy du repère local, compatible avec la taille et la capacité de mouvement des moyens de marquage, de façon que lesdits moyens de marquage soient en mesure de réaliser de façon uniforme le marquage d'une cellule élémentaire de dimension dx selon l'axe Ox et dy selon l'axe Oy, sans déborder sur les cellules voisines ;
Délimiter sur la zone engazonnée un rectangle de marquage parallèle auxdits axes Ox, Oy du repère, et défini par ses coordonnées limites entre x1 et x2, et entre y1 et y2, et dans lequel ledit motif sera reproduit à l'échelle voulue sur le gazon, et inscrit dans ledit rectangle, atteignant sans les dépasser les deux côtés du rectangle parallèles à l'axe Oy du repère aux cotes respectives x1 et x2, et un premier côté du rectangle parallèle à l'axe Ox à la cote y1, la cote y2 du second coté du rectangle parallèle à l'axe Ox étant calculée en fonction du rapport hauteur sur largeur du motif à reproduire et de façon que, d'une part, la longueur Y= y2- y1 des côtés parallèles à l'axe Oy dudit rectangle soit un multiple de dy et que, d'autre part, ledit motif, s'il était reproduit avec le rapport exact hauteur sur largeur du motif à reproduire, aurait une longueur Y= y2 - y1 + r avec r inférieur à dy ;
Ajuster le rapport hauteur sur largeur du motif à reproduire en négligeant le reste r calculé précédemment de façon que l'image ajustée s'inscrive exactement dans le rectangle de marquage de surface X.Y où X = x2 - x1 délimité à l'étape précédente, la distorsion liée à l'ajustement étant très faible dans la mesure où r est plus petit que dy, et où dy est lui-même très petit par rapport à la hauteur Y = y2 - y1 du rectangle;
Faire une partition du rectangle de marquage en une juxtaposition de cellules élémentaires de dimension dx selon l'axe Ox et dy selon l'axe Oy du repère local, lesdites cellules élémentaires étant disposées sous la forme de lignes et de colonnes constitutives d'une matrice ;
Pour chaque moyen de marquage, décomposer le motif à marquer en une mosaïque de pixels associés aux cellules élémentaires de la matrice ;
   - Déterminer, pour chaque cellule élémentaire de la matrice, la tâche à réaliser par chaque moyen de marquage de l'ensemble des moyens de marquage en fonction de la valeur du pixel associée à ladite cellule élémentaire pour le moyen de marquage considéré ;
   - Déplacer le véhicule sur la zone engazonnée selon un trajet permettant de couvrir toutes les cellules élémentaires ;
   - Déterminer, en temps réel et dans le repère local, la position et l'orientation du véhicule lors de son déplacement sur le gazon, au moyen d'un dispositif de localisation et asservir les moyens de marquage à la position et à l'orientation du véhicule mesurées pour ajuster en permanence le fonctionnement des moyens de marquage en fonction des tâches à accomplir sur chaque cellule élémentaire de la matrice et réaliser lesdites tâches à réaliser dans chaque cellule élémentaire selon la matrice .

De préférence, le procédé comprend les étapes complémentaires suivantes :
- Disposer d'un dispositif de commande automatique du véhicule et l'asservir à la mesure de position et d'orientation du véhicule pour ajuster en permanence le trajet afin de couvrir le rectangle de marquage parallèlement soit à l'axe Ox, soit à l'axe Oy ;
- Vérifier que toutes les cellules élémentaires de la matrice ont été traitées ;
- Tant que toutes les cellules élémentaires de la matrice (M) n'ont pas été traitées, commander le véhicule pour le déplacer sur la zone de marquage.

Avantageusement, le point d'origine (O) du repère local est situé sur ou à proximité de la zone de marquage.

Selon un mode de réalisation préféré de la présente invention, le procédé comprend, en outre, les étapes suivantes :
- Déterminer les coordonnées (X_{A}, Y_{A}, Z_{A}) d'un point d'observation cible (A) dans le repère local défini, qui comprend trois axes
- Sélectionner un motif source plan,
- Déterminer le motif à marquer en fonction du motif source pour compenser une distorsion liée à la position relative du point d'observation cible par rapport à la zone de marquage, de telle sorte qu'une image du motif à marquer vue depuis ledit point d'observation cible soit sensiblement identique à une image du motif source qui serait posée à plat au niveau du gazon mais sur un plan horizontal tangent et dont la projection verticale sur le gazon correspondrait aux limites de la zone de marquage et qui serait vue depuis un point d'observation source situé à la verticale du centre de la zone de marquage et de préférence à une hauteur depuis laquelle l'image complète est vue selon approximativement le même angle solide que depuis ledit point d'observation cible.
   1. Dans le mode d'application ci-dessus, on ne tient pas compte de la forme altimétrique de la surface gazonnée et on n'a pas besoin de la déterminer.
   2. Selon un autre mode de réalisation préféré, pour obtenir un résultat plus précis encore et permettant notamment de tenir compte de la forme altimétrique z(x, y), la détermination du motif à marquer pour compenser une distorsion, liée à la position relative du point d'observation cible par rapport à la zone de marquage et à la forme altimétrique z(x, y) de la surface de gazon, est calculée à partir du motif source de telle sorte que l'image marquée sur le terrain soit exactement la même que celle obtenue en projetant le motif source sur la zone de marquage par un moyen de projection lumineuse positionné à l'emplacement exact du point d'observation cible.

Selon ce mode de réalisation préféré de la présente invention, le procédé comprend donc les étapes supplémentaires suivantes :
- Déterminer les coordonnées (X_{A}, Y_{A}, Z_{A}) d'un point d'observation cible (A) dans le repère local défini, qui comprend trois axes ;
- Déterminer la forme altimétrique z(x, y) de la surface de gazon de la zone de marquage ;
- Sélectionner un motif source plan,
- Calculer le motif à marquer en fonction du motif source pour compenser une distorsion liée à la position relative du point d'observation cible par rapport à la zone de marquage et à la forme altimétrique z(x, y) de la surface engazonnée, de telle sorte que cette image du motif à marquer sur le terrain soit la même que celle obtenue en projetant le motif source sur la zone de marquage par un moyen de projection lumineuse positionné à l'emplacement du point d'observation cible.

De façon moins précise mais particulièrement pratique, le procédé selon l'invention précédemment décrit comprend des calculs paramétriques simples dans lesquels la courbe altimétrique z(x, y) est remplacée par différentes courbes paramétriques z'(x,y) pré-établies : par défaut par un plan horizontal constant z=0 au niveau du gazon ou par une forme en toit décrite par les coordonnées du faîtage (par défaut l'axe longitudinal médian) et la pente du toit en %, ou par une mono pente décrite par sa pente en % et sa ligne de pente.

Avantageusement, le procédé comporte, en outre, l'étape de déterminer la position et l'orientation du véhicule dans le repère local au moyen d'un dispositif de télémétrie optique incluant une source laser émettant depuis le point d'origine (O) du repère local et d'un prisme de poursuite réfléchissant situé sur le véhicule.

De préférence, les moyens de marquage sont constitués par des buses d'air comprimé permettant de plier les feuilles ou brins d'herbe dans un sens ou un autre, et de rouleaux, disposés après ces buses dans le sens d'avancement du véhicule (V), pour fixer l'orientation des feuilles ou brins d'herbe.

La description qui va suivre et qui ne présente aucun caractère limitatif, d'un exemple de réalisation de la présente invention, doit être lue en regard des figures annexées, qui représentent :
- Sur la figure 1, une méthode de compensation de la distorsion d'image.
- Sur la figure 2, un système de marquage automatique dans lequel le procédé de l'invention peut être mis en oeuvre.
- Sur la figure 3, une vue schématique d'une zone engazonnée avec une zone de marquage et un motif dans cette dernière zone.
- Sur la figure 4, un schéma représentant la vue de trois images d'un même motif source vues d'un même point d'observation cible.

La présente invention concerne un procédé pour reproduire dans un rectangle d'une zone engazonnée, telle que la surface en gazon naturel d'un terrain de sport, un motif de grande dimension comme, par exemple, un motif publicitaire. Cette reproduction ou marquage est réalisé au moyen d'un véhicule (V) comportant notamment un ensemble de moyens de marquage, et comprend les étapes suivantes :
- a) Définir un repère local orthonormé (0 ; x, y, z), les deux axes (Ox, Oy) étant dans le plan horizontal, l'axe (Oz) étant l'axe vertical et le point d'origine (O) étant situé sur ou à proximité de la zone engazonnée (T)) ;
- b) Déterminer la taille prédéfinie (dx, dy) des cellules élémentaires selon respectivement le premier axe (Ox) et le deuxième axe (Oy) du repère local, compatible avec la taille et la capacité de mouvement des moyens de marquage, de façon que lesdits moyens de marquage soient en mesure de réaliser de façon uniforme le marquage d'une cellule élémentaire de dimension dx selon l'axe Ox et dy selon l'axe Oy, sans déborder sur les cellules voisines ;
- c) Délimiter sur la zone engazonnée (T) un rectangle de marquage (Q) parallèle auxdits axes (Ox, Oy) du repère, et défini par ses coordonnées limites entre x₁ et x₂, et entre y₁ et y₂, et dans lequel ledit motif sera reproduit à l'échelle voulue sur le gazon, et inscrit dans ledit rectangle (Q), atteignant sans les dépasser les deux côtés du rectangle parallèles à l'axe Oy du repère aux cotes respectives x₁ et x₂, et un premier côté du rectangle parallèle à l'axe Ox à la cote y₁ , la cote y₂ du second côté du rectangle parallèle à l'axe Ox étant calculée en fonction du rapport hauteur sur largeur du motif à reproduire et de façon que, d'une part, la longueur Y = y₂ - y₁ des côtés parallèles à Oy dudit rectangle soit un multiple de dy et que, d'autre part, ledit motif, s'il était reproduit avec le rapport exact hauteur sur largeur du motif à reproduire, aurait une hauteur Y = y₂ - y₁ + r avec r inférieur à dy ;
- d) Ajuster le rapport hauteur sur largeur du motif à reproduire en négligeant le reste r calculé précédemment de façon que l'image ajustée s'inscrive exactement dans le rectangle de marquage (Q) de surface X.Y calculé à l'étape précédente, la distorsion liée à l'ajustement étant très faible dans la mesure où r est plus petit que dy, et où dy est lui-même très petit par rapport à la hauteur Y = y₂ - y₁ du rectangle ;
- e) Faire une partition du rectangle de marquage (Q) en une juxtaposition de cellules élémentaires de dimension dx selon l'axe Ox et dy selon l'axe Oy du repère local, lesdites cellules élémentaires étant disposées sous la forme de lignes et de colonnes constitutives d'une matrice (M) ;
- f) Pour chaque moyen de marquage, décomposer le motif à marquer en une mosaïque de pixels associés aux cellules élémentaires de la matrice (M) ;
- g) Déterminer, pour chaque cellule élémentaire de la matrice, la tâche à réaliser par chaque moyen de marquage de l'ensemble des moyens de marquage en fonction de la valeur du pixel associée à ladite cellule élémentaire pour le moyen de marquage considéré,
- h) Déplacer le véhicule (V) sur la zone engazonnée selon un trajet permettant de couvrir toutes les cellules élémentaires ;
- i) déterminer, en temps réel et dans le repère local, la position et l'orientation du véhicule (V) lors de son déplacement sur le gazon, au moyen d'un dispositif de localisation et asservir chaque moyen de marquage à la position et à l'orientation du véhicule mesurées pour ajuster en permanence le fonctionnement des moyens de marquage en fonction des tâches à accomplir sur chaque cellule élémentaire de la matrice (M) et réaliser lesdites tâches à réaliser dans chaque cellule élémentaire selon la matrice (M).

En outre, on peut numériser la surface engazonnée par rapport à ce repère local: cette numérisation peut concerner tous les terrains sur lesquels des motifs sont susceptibles d'être marqués, permettant ainsi une opération rapide, précise et reproductible.

Selon ce procédé, le fait de pouvoir numériser tous les terrains de sport sur lesquels des motifs sont susceptibles d'être marqués par rapport à un repère local propre à chaque terrain, confère au procédé une grande liberté de mise en oeuvre.

Ce procédé peut comporter les étapes complémentaires suivantes :
- Disposer d'un dispositif de commande automatique du véhicule (V) et l'asservir à la mesure de position et d'orientation du véhicule pour ajuster en permanence le trajet afin de couvrir le rectangle de marquage parallèlement soit à l'axe Ox, soit à l'axe Oy ;
- Vérifier que toutes les cellules élémentaires de la matrice ont été traitées ;
- Tant que toutes les cellules élémentaires de la matrice (M) n'ont pas été traitées, commander le véhicule pour le déplacer sur la zone de marquage.

Ce procédé permet également aussi de rendre un motif marqué (D) visible d'un point d'observation (A) prédéterminé sans distorsion : c'est-à-dire qu'un observateur situé en ce point d'observation (A) verra le motif comme s'il était positionné perpendiculairement au plan de ce motif. Cet observateur peut être, par exemple, une caméra de télévision.

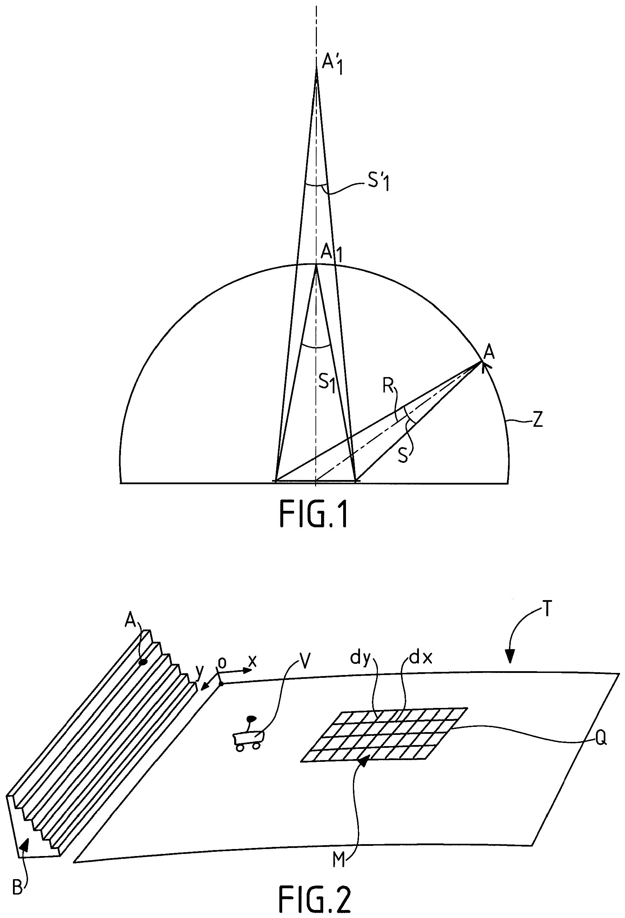

Comme représenté sur la figure 1, l'observateur situé au point d'observation (A) et à une distance (R) du motif (D) marqué sur le terrain voit ce motif (D) sous un angle solide (S) : ceci entraîne une vue avec distorsion du motif (D).

On constate que l'angle solide (S) diminue au fur et à mesure que le point (A) se déplace du point (A1) situé à la verticale du motif (D) vers le plan du terrain.

De même, si le point (A1) est déplacé selon une verticale au motif (D) en s'éloignant de ce motif (D), l'angle solide (S1) sous lequel ce motif (D) est vu, va en diminuant. Ainsi, l'angle solide (S1) lorsque le point (A1) est à la distance (R) du motif (D), est plus grand que l'angle solide (S'1) pour un point d'observation (A'1) situé sur la même verticale que le point (A1) mais à une distance supérieure à la distance (R).

Pour calculer la distorsion à faire subir au motif (D) pour être vu d'un observateur situé au point (A) comme si cet observateur était situé à la verticale du motif (D), il faut donc connaître les dimensions du motif (D), la distance (R) à laquelle le point (A) est situé du motif (D) et l'angle zénithal (Z) du point (A) : ainsi sont nécessaires trois paramètres pour déterminer la façon dont l'observateur situé au point (A) voit le motif (D). Mais il faut aussi déterminer sous quel angle solide (S1) on veut voir le motif (D). Une fois ces quatre paramètres déterminés, il est possible de calculer l'image déformée du motif (D) à marquer pour compenser la distorsion liée à la position relative du point d'observation (A) par rapport au quadrangle dans lequel cette image déformée sera marquée.

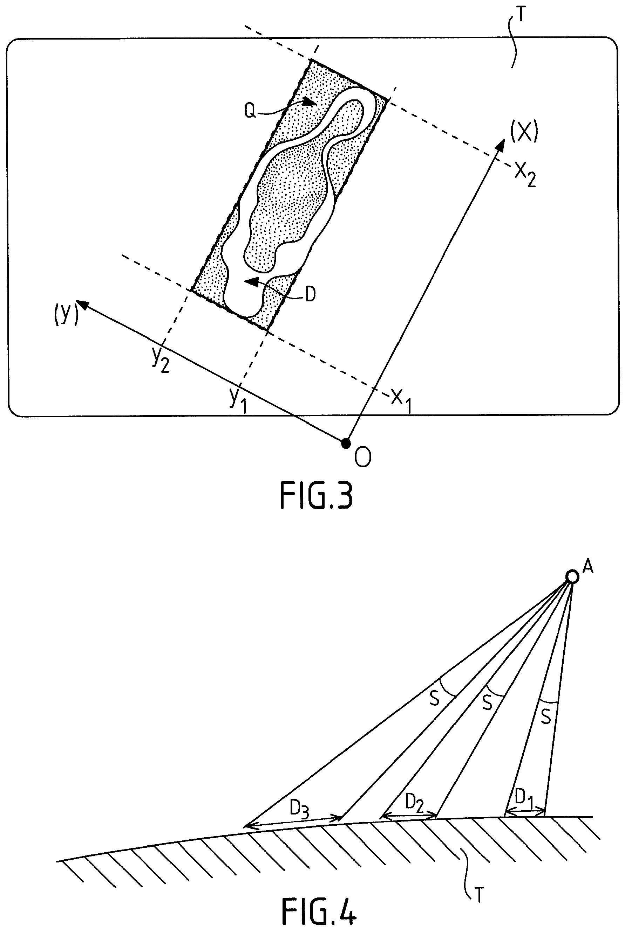

La figure 2 représente schématiquement un système de marquage automatique dans lequel ce procédé peut être mis en oeuvre et la figure 3 représente schématiquement la portion de terrain engazonnée comportant le rectangle de marquage.

Comme représenté sur les figures 2 et 3, le point d'origine (O) du repère local est situé, selon le présent exemple de réalisation, à un coin de la zone engazonnée, en occurrence un terrain rectangulaire (T) pour la pratique du football et/ou du rugby, par exemple. Les axes Ox et Oy de ce repère local sont parallèles respectivement à la longueur et à la largeur de ce terrain (T). Ceci permet une numérisation du terrain (T).

Sur ce terrain (T), on délimite un rectangle (Q) qui constitue la zone à marquer dans laquelle le motif à marquer sera marqué, et dont on détermine les coordonnées de chaque sommet (X₁, Y₁), (X₂, Y₁), (X₁, Y₂) et (X₂, Y₂) dans le repère local.

On réalise une partition du rectangle (Q), c'est-à-dire de la zone à marquer, en cellules élémentaires de dimension dx et dy de telle sorte à constituer une matrice (M) de m lignes et n colonnes avec n.dx=X₂-X₁ et m.dy=Y₂-Y₁.

Le motif à marquer est, quant à lui, décomposé en une mosaïque de pixels associés aux cellules élémentaires de la matrice (M), et on détermine, pour chaque cellule élémentaire de la matrice (M), des tâches à réaliser par les moyens de marquage en fonction d'une valeur de pixel associé à cette cellule élémentaire pour marquer le motif à marquer sur la zone de marquage (Q).

L'ensemble des moyens de marquage sont disposés sur un véhicule (V) qui est guidé dans le repère local. Ces moyens de marquage peuvent être constitués par des buses d'air comprimé permettant de plier les feuilles dans un sens ou un autre, et de rouleaux, disposés après ces buses dans le sens d'avancement du véhicule (V), pour fixer l'orientation des feuilles.

On mesure la position du véhicule (V) et on oriente son déplacement sur le terrain (T) et plus particulièrement sur la zone à marquer, par exemple, par un moyen de télémétrie optique incluant une source laser émettant depuis le point d'origine (O) du repère local et d'un prisme de poursuite réfléchissant situé sur ce véhicule (V).

Mais, lorsque ce motif à marquer ou motif source est vu d'un point d'observation cible (A) situé en hauteur et à une certaine distance du rectangle (Q), par exemple dans une tribune (B) au bord du terrain (T), il est vu avec une certaine distorsion. C'est par exemple le cas lorsque ce point d'observation cible (A) est une caméra de télévision. Cette distorsion peut rendre la lecture du motif marqué difficile pour un téléspectateur et même le rendre illisible pour ce dernier.

Selon un mode de réalisation de la présente invention, on détermine les coordonnées (X_{A}, Y_{A}, Z_{A}) du point d'observation cible A dans le repère local (O ; x, y, z).

A partir des coordonnées du point d'observation cible (A) et des coordonnées de la zone à marquer (Q), il est possible de déterminer le motif cible qui sera marqué dans cette zone de marquage par les moyens de marquage. Le motif cible sera ainsi vu du point d'observation cible (A) comme si le motif source était vu d'un point d'observation source (A1) situé perpendiculairement à la zone de marquage et à une distance prédéfinie de celle-ci.

En conséquence, pour chaque pixel du motif source, un angle solide du pixel vu depuis le point d'observation cible (A) est égal à l'angle solide d'une zone du motif source vu depuis le point d'observation source (A1).

Dans l'exemple de réalisation de l'invention décrit ci-dessus, on ne tient pas compte de la forme altimétrique de la surface gazonnée et on n'a pas besoin de la déterminer.

Pour une image particulièrement précise et notamment si l'on veut ou doit tenir compte la forme altimétrique z(x, y), la détermination du motif à marquer pour compenser une distorsion, liée à la position relative du point d'observation cible par rapport à la zone de marquage et à la forme altimétrique z(x, y) de la surface de gazon, est calculée à partir du motif source de telle sorte que l'image marquée sur le terrain soit exactement la même que celle obtenue en projetant le motif source sur la zone de marquage par un moyen de projection lumineuse positionné à l'emplacement exact du point d'observation cible.

Dans ce mode de réalisation de la présente invention, le procédé comprend donc les étapes supplémentaires suivantes :
- Déterminer les coordonnées (X_{A}, Y_{A}, Z_{A}) d'un point d'observation cible (A) dans le repère local défini, qui comprend trois axes ;
- Déterminer la forme altimétrique z(x, y) de la surface de gazon de la zone de marquage ;
- Sélectionner un motif source plan ;
- Calculer le motif à marquer en fonction du motif source pour compenser une distorsion liée à la position relative du point d'observation cible par rapport à la zone de marquage et à la forme altimétrique z(x, y) de la surface engazonnée, de telle sorte que cette image du motif à marquer sur le terrain soit la même que celle obtenue en projetant le motif source sur la zone de marquage par un moyen de projection lumineuse positionné à l'emplacement du point d'observation cible.

A la figure 4, sont représentées trois images (D₁, D₂, D₃) du même motif marqué disposées sur un terrain (T) à différentes distances d'un même point d'observation cible (A) et vues de ce point sous le même angle (S). Comme on le notera, plus l'image est éloignée du point d'observation cible (A) plus elle est grande : l'image (D₁), la plus proche du point d'observation cible (A), est plus petite que l'image (D₂), elle-même plus petite que l'image (D₃) qui, de plus est disposée sur une surface à marquer présentant une rupture de pente.

Pour une réalisation moins précise mais largement facilitée et beaucoup plus rapide, le procédé selon l'invention propose par défaut différents modèles paramétriques de forme altimétrique pré-établie z'(x, y).

Ainsi, dans le mode de réalisation précédemment présenté, la véritable forme altimétrique z(x, y), si elle n'est pas déterminée de façon plus précise, est remplacée par défaut au choix par un plan horizontal z=0 ou par une forme paramétrique en toit décrite par les coordonnées du faîtage (par défaut l'axe longitudinal médian) et la pente du toit en %, ou par une mono pente décrite par sa pente en % et sa ligne de pente.

La transformation du motif source en un motif cible peut être réalisée à bord du véhicule (V) ou bien en un autre lieu : le motif cible est alors transmis au véhicule par un système de transmission approprié à un élément récepteur situé sur ce véhicule. Le moyen recevant le motif cible soit d'un dispositif ayant réalisé la transformation à bord du véhicule (V), soit de l'élément récepteur, commande les moyens de marquage et les mouvements du véhicule (V) sur la zone de marquage.

Ainsi, selon le procédé de la présente invention, le fonctionnement des moyens de marquage sont ajustés en permanence en fonction de la matrice précédemment déterminée des tâches à accomplir pour chaque cellule élémentaire et on vérifie que toutes les cellules élémentaires de la matrice ont été effectivement traitées, sinon le véhicule (V) continue de se déplacer dans le rectangle (Q) et les moyens de marquage restent activés.

## Revendications

1. - Procédé pour reproduire un motif à marquer sur une zone engazonnée (T) de grande dimension à l'aide d'un véhicule (V) comportant des moyens de marquage, lequel procédé comprend les étapes suivantes :
- définir un repère local orthonormé O ; Ox, Oy, Oz, les deux axes Ox, Oy étant dans le plan horizontal, l'axe Oz étant l'axe vertical et le point d'origine (O) étant situé sur ou à proximité de la zone engazonnée,
- déterminer la taille prédéfinie dx, dy des cellules élémentaires selon le premier axe Ox et selon le deuxième axe Oy du repère local, compatible avec la taille et la capacité de mouvement des moyens de marquage de façon que lesdits moyens de marquage soient en mesure de réaliser de façon uniforme le marquage d'une cellule élémentaire de dimension dx selon l'axe Ox et dy selon l'axe Oy sans déborder sur les cellules voisines
- délimiter sur la zone engazonnée (T) un rectangle de marquage ( R) parallèle auxdits axes Ox, Oy du repère et défini par ses coordonnées limites entre x1 et x2, et entre y1 et y2, et dans lequel ledit motif sera reproduit à l'échelle voulue sur le gazon et inscrit dans ledit rectangle, atteignant sans les dépasser les deux côtés du rectangle parallèles à l'axe Oy du repère aux cotes respectives x1 et x2, et un premier côté du rectangle parallèle à l'axe des x à la cote y1,
- faire une partition du rectangle de marquage (Q) en une juxtaposition de cellules élémentaires de taille dx selon le premier axe et dy selon le deuxième axe du repère local, lesdites cellules élémentaires étant disposées sous la forme de lignes et de colonnes constitutives d'une matrice (M),
- pour chaque moyen de marquage, décomposer le motif à marquer en une mosaïque de pixels associés aux cellules élémentaires de la matrice (M) et au moyen de marquage considéré,
- déterminer, pour chaque cellule élémentaire de la matrice, la tâche à réaliser par chaque moyen de marquage en fonction de la valeur du pixel associée à ladite cellule élémentaire pour au moyen de marquage considéré et, pour marquer le motif à marquer sur la zone de marquage,
- déplacer le véhicule (V) sur la zone engazonnée selon un trajet permettant de couvrir toutes les cellules élémentaires,
- déterminer ou mesurer, en temps réel et dans le repère local, la position et l'orientation du véhicule (V) lors de son déplacement sur le gazon, au moyen d'un dispositif de localisation,
- asservir les moyens de marquage à la position et à l'orientation du véhicule mesurées pour ajuster en permanence le fonctionnement des moyens de marquage en fonction des tâches à accomplir sur chaque cellule élémentaire de la matrice (M) et réaliser lesdites tâches à réaliser dans chaque cellule élémentaire selon la matrice (M),
lequel procédé est **caractérisé par le fait que**
- la cote y2 du second côté du rectangle parallèle à l'axe Ox est calculée en fonction du rapport hauteur sur largeur du motif à reproduire et de façon que, d'une part, la taille Y = y2 - y1 des cotés parallèles à y dudit rectangle soit un multiple de dy et que, d'autre part, ledit motif s'il était reproduit avec le rapport exact hauteur sur largeur du motif à reproduire aurait une longueur Y = y2 - y1 + r avec r inférieur à dy
- le rapport hauteur sur largeur du motif à reproduire est ajusté en négligeant le reste r calculé précédemment de façon que l'image ajustée s'inscrive exactement dans le rectangle de marquage (Q) de surface X.Y où X = x2 - x1, délimité à l'étape précédente, la distorsion liée à l'ajustement étant très faible dans la mesure où r est plus petit que dy et où dy est lui-même très petit par rapport à la longueur Y = y2 - y1 du rectangle.

2. - Procédé selon la revendication 1, **caractérisé par le fait qu'**il comprend les étapes complémentaires suivantes :
- disposer d'un dispositif de commande automatique du véhicule et l'asservir à la mesure de position et d'orientation du véhicule pour ajuster en permanence le trajet afin de couvrir le rectangle de marquage parallèlement soit à l'axe Ox, soit à l'axeOy,
- vérifier que toutes les cellules élémentaires de la matrice ont été traitées,
- tant que toutes les cellules élémentaires de la matrice n'ont pas été traitées, commander le véhicule pour le déplacer sur la zone de marquage.

3. - Procédé selon l'une quelconque des revendications 1 à 2, **caractérisé par le fait qu'**il comprend, en outre, les étapes suivantes :
- déterminer les coordonnées X_{A}, Y_{A}, Z_{A} d'un point d'observation cible (A) dans le repère local,
- sélectionner un motif source plan,
- déterminer le motif à marquer en fonction du motif source pour compenser une distorsion liée à la position relative du point d'observation cible (A) par rapport à la zone de marquage (Q), de telle sorte qu'une image du motif à marquer vue depuis ledit point d'observation cible (A) soit sensiblement identique à une image du motif source qui serait posée à plat au niveau du gazon mais sur un plan horizontal tangent et dont la projection verticale sur le gazon correspondrait aux limites de la zone de marquage et qui serait vue depuis un point d'observation source situé à la verticale du centre de la zone de marquage, à une hauteur depuis laquelle l'image complète est vue selon le même angle solide que depuis ledit point d'observation cible (A).

4. - Procédé selon l'une quelconque des revendications 1 à 2, **caractérisé par le fait qu'**il comprend, en outre, les étapes suivantes :
- déterminer les coordonnées M, YA, ZA d'un point d'observation cible (A) dans le repère local défini, qui comprend trois axes ;
- déterminer la forme altimétrique z(x, y) de la surface de gazon de la zone de marquage;
- sélectionner un motif source plan ;
- calculer le motif à marquer en fonction du motif source pour compenser une distorsion liée à la position relative du point d'observation cible par rapport à la zone de marquage et liée à la forme altimétrique z(x, y) de la surface engazonnée, de telle sorte que cette image du motif à marquer sur le terrain soit la même que celle obtenue en projetant le motif source sur la zone de marquage par un moyen de projection lumineuse positionné à l'emplacement exact du point d'observation cible.

5. - Procédé selon la revendication 4, **caractérisé par le fait que** la véritable forme altimétrique z(x, y), est remplacée par une forme paramétrique simplifiée z'(x,y) proposée par défaut parmi :
- un plan horizontal z=constante
- une forme paramétrique en toit décrite par les coordonnées du faitage et la pente du toit en%,
- une mono pente décrite par sa pente en % et sa ligne de pente

6. - Procédé selon l'une quelconque des revendications 1 à 5, **caractérisé par le fait que** l'étape de mesure de la position et de l'orientation du véhicule (V) dans le repère local est réalisée au moyen d'un dispositif de télémétrie optique incluant une source laser émettant depuis le point d'origine (O) du repère local et d'un prisme de poursuite réfléchissant situé sur ledit véhicule (V).

7. - Procédé selon l'une quelconque des revendications 1 à 6, **caractérisé par le fait que** le véhicule se déplace parallèlement soit à l'axe Ox, soit l'axe Oy.

8. - Procédé selon l'une quelconque des revendications 1 à 7, **caractérisé par le fait que** les moyens de marquage sont constitués par des buses d'air comprimé permettant de plier les feuilles ou brins d'herbe dans un sens ou un autre, et de rouleaux, disposés après lesdites buses dans le sens d'avancement du véhicule (V), pour fixer l'orientation des feuilles ou brins d'herbe.

## Patentansprüche

1. Verfahren zur Wiedergabe eines Musters, dass auf einer großflächigen Rasenfläche (T) mittels eines Fahrzeuges (V), welches Markierungsmittel aufweist, markiert werden soll, wobei das Verfahren folgende Schritte umfasst:
- Definieren eines lokalen orthonormalen Koordinatensystems O ; Ox, Oy, Oz, wobei die beiden Achsen Ox, Oy auf der horizontalen Ebene sind und die Achse Oz die vertikale Achse ist und der Koordinatenursprung (O) auf oder in der Nähe des Grasbereiches angeordnet ist;
- Bestimmen der vordefinierte Größe dx, dy der Elementarzellen entlang der ersten Achse Ox und entlang der zweiten Achse Oy des lokalen Koordinatensystems, die mit der Größe und der Bewegungsfähigkeit der Markierungsmittel kompatibel ist, so dass die Markierungsmittel in der Lage sind, die Markierung einer Elementarzelle mit der Größe dx entlang der Achse Ox und dy entlang der Achse Oy gleichmäßig durchzuführen, ohne auf die benachbarten Zellen überzugreifen
- Eingrenzen eines Markierungsrechteckes ( R) auf der Rasenfläche (T), welches parallel zu den genannten Achsen Ox und Oy des Koordinatensystems verläuft und welches durch seine Grenzkoordinaten zwischen x1 und x2 und zwischen y1 und y2 definiert ist, wobei das Muster im gewünschten Maßstab auf dem Rasen reproduziert und in das Rechteck eingefügt wird, wobei das Muster die beiden Seiten des Rechtecks, die parallel zur Oy Achse des Koordinatensystems verlaufen, an den jeweiligen Koordinaten x1 und x2 erreicht, ohne sie zu überschreiten, und eine erste Seite des Rechtecks, welche parallel zur X-Achse an dem Wert y1 verläuft,
- Erstellen einer Unterteilung des Markierungsrechteckes (Q) in eine Aneinanderreihung von Elementarzellen der Größe dx entlang der ersten Achse und der Größe dy entlang der zweiten Achse des lokalen Koordinatensystems, wobei die Elementarzellen in Form von Zeilen und Spalten angeordnet sind, die eine Matrix (M) bilden,
- Zerlegen des zu markierenden Musters für jedes Markierungsmittel in ein Mosaik von Pixeln, die den Elementarzellen der Matrix (M) und dem betreffenden Markierungsmittel zugeordnet sind,
- Für jede Elementarzelle der Matrix bestimmen der Aufgabe, die von jedem Markierungsmittel ausgeführt werden soll, in Abhängigkeit von dem Pixelwert, der der Elementarzelle für das jeweilige Markierungsmittel zugeordnet ist, um das zu markierende Muster auf dem Markierungsbereich zu markieren,
- Bewegen des Fahrzeuges (V) auf der Rasenfläche gemäß einer Strecke, die alle Elementarzellen abdeckt
- Bestimmen oder Messen, in Echtzeit und im lokalen Koordinatensystem, der Position und der Orientierung des Fahrzeugs (V) während seiner Bewegung auf dem Rasen mithilfe eines Ortungsgeräts;
- Steuern der Markierungsmittel an die gemessene Position und Orientierung des Fahrzeugs, um den Betrieb der Markierungsmittel ständig in Abhängigkeit von der auf jeder Elementarzelle der Matrix (M) auszuführenden Aufgaben auszurichten und die in jeder Elementarzelle auszuführenden Aufgaben gemäß der Matrix (M) zu realisieren,
- wobei das Verfahren **dadurch gekennzeichnet ist, dass**
- der Wert y2 der zweiten Seite des Rechtecks, die parallel zur Ox-Achse verläuft, wird anhand des Verhältnisses von Höhe zu Breite des zu reproduzierenden Musters berechnet, so dass, zum einem die Größe Y = y2 - y1 der zu y parallelen Seiten des Rechtecks ein Vielfaches von dy ist und dass zum anderen das Muster, wenn es mit dem genauen Verhältnis Höhe zu Breite des zu reproduzierenden Musters abgebildet wird, eine Länge Y = y2 - y1 + r mit r kleiner als dy hätte
- das Verhältnis Höhe zu Breite des zu reproduzierenden Musters wird unter Vernachlässigung des Rests r angepasst, welcher zuvor so berechnet wurde, dass das angepasste Bild sich genau in das Markierungsrechteck (Q) mit der Fläche X.Y oder X = x2 - x1 einfügt, welches in dem vorhergehende Schritt eingegrenzt wurde, wobei die mit der Anpassung verbundene Verzerrung sehr gering ist, sofern r kleiner als dy ist und/oder dy selbst sehr klein im Vergleich zu zur Länge Y = y2 - y1 des Rechtecks ist.

2. Verfahren gemäß Anspruch 1, **dadurch gekennzeichnet, dass** es die folgenden zusätzlichen Schritte umfasst:
- Verfügen über eine Vorrichtung zur automatischen Steuerung des Fahrzeugs, welche auf die Messung der Position und der Orientierung des Fahrzeugs geregelt wird, um die Strecke ständig anzupassen, um das Markierungsrechteck parallel zur Ox-Achse oder zur Oy-Achse abzudecken,
- Prüfen, dass alle Elementarzellen der Matrix bearbeitet wurden,
- Steuern des Fahrzeuges, um es auf dem Markierungsbereich zu bewegen, solange nicht alle Elementarzellen der Matrix bearbeitet wurden.

3. Verfahren gemäß einem der Ansprüche 1 bis 2, **dadurch gekennzeichnet, dass** es weiterhin die folgenden Schritte umfasst:
- Bestimmen der Koordinaten X_{A}, Y_{A}, Z_{A} eines Zielbeobachtungspunktes (A) im lokalen Koordinatensystem,
- Auswählen eines planen Ursprungsmusters,
- Bestimmen des zu markierenden Musters in Anhängigkeit des Ursprungsmusters, um eine Verzerrung, welche mit der relativen Position des Zielbeobachtungspunktes (A) im Verhältnis zum Markierungsbereich (Q) zusammenhängt, auszugleichen, so dass ein Bild des zu markierenden Musters aus der Perspektive des Zielbeobachtungspunktes (A) im Wesentlichen identisch ist mit einem Bild des Ursprungsmusters, welches flach auf Höhe des Rasen aufgebracht werden würde aber auf einer horizontale tangentialen Ebene und deren vertikale Projektion auf dem Rasen mit den Grenzen der Markierungsposition übereinstimmen würde und gesehen werden würde ausgehend von einem Zielbeobachtungspunkt, welcher vertikal in der Mitte des Markierungsbereiches angeordnet ist, auf einer Höhe aus welcher das ganze Bild aus dem gleichen Raumwinkel wie ausgehend vom Zielbeobachtungspunkt gesehen wird.

4. Verfahren gemäß einem der Ansprüche 1 bis 2, **dadurch gekennzeichnet**, des es weiterhin die folgenden Schritte umfasst:
- Bestimmen des Koordinaten M, YA, ZA eines Zielbeobachtungspunktes (a) im vorgegebenen lokalen Koordinatensystem, welches drei Achsen umfasst;
- Bestimmen der Höhenform z(x, y) der Rasenfläche des Markierungsbereiches;
- Auswahl eines planen Ursprungsmusters;
- Berechnen des zu markierende Musters in Abhängigkeit des Ursprungsmusters um eine Verzerrung, welche mit der relativen Position des Zielbeobachtungspunktes im Verhältnis zum Markierungsbereich und mit der Höhenform z(x, y) der Rasenfläche zusammenhängt, auszugleichen, so dass das Bild des zu markierenden Musters auf dem Gelände dasselbe ist, wie das Bild, welches erhalten wird, wenn das Ursprungsmuster auf dem Markierungsbereich durch ein Lichtprojektionsmittel, welches exakt am Standort des Zielbeobachtungspunktes angeordnet ist, projiziert wird.

5. Verfahren gemäß Anspruch 4, **dadurch gekennzeichnet, dass** die tatsächliche Höhenform z(x, y) durch eine vereinfachte Parameterform z(x,y) ersetzt wird, die standardmäßig vorgeschlagen wird aus:
- einer horizontalen Ebene z=konstant
- einer parametrische Dachform, die durch die Koordinaten des Dachfirsts und der Dachneigung in % beschrieben wird,
- einem einseitigen Gefälle, welches durch das Gefälle in % und der Falllinie beschrieben wird

6. Verfahren gemäß einem der Ansprüche 1 bis 5, **dadurch gekennzeichnet, dass** der Schritt des Messens der Position und Orientierung des Fahrzeuges (V) in lokalen Koordinatensystem mittels einer optischen Telemetriervorrichtung, welche eine Laserquelle, welche ausgehend vom Koordinatenursprung (O) des lokalen Koordinatensystems ausstrahlt, und ein reflektierendes Prisma zur Verfolgung, das sich auf dem Fahrzeug (V) befindet, realisiert wird.

7. Verfahren gemäß einem der Ansprüche 1 bis 6, **dadurch gekennzeichnet, dass** das Fahrzeug sich parallel zur Achse Ox oder zur Achse Oy bewegt.

8. Verfahren gemäß einem der Ansprüche 1 bis 7, **dadurch gekennzeichnet, dass** die Markierungsmittel aus Druckluftdüsen gebildet werden, welche es ermöglichen, Blätter oder Grashelme in die eine oder andere Richtung zu falten, und durch Rollen, welche nach den Druckluftdüsen in Richtung der Fortbewegung des Fahrzeuges (V) angeordnet sind.

## Claims

1. - A method for reproducing a pattern to be marked on a large-sized turfed area (T) using a vehicle (V) comprising marking means, he method comprising the following steps:
- - defining an orthonormal local coordinate system O; x, y, z, the two axes Ox, Oy being in the horizontal plane, the axis Oz being the vertical axis and the point of origin (O) being located on or near the turfed area,
- determining the predefined size dx, dy of the elementary cells along the first axis Ox and along the second axis Oy of the local coordinate system, compatible with the size and the movement capability of the marking means so that said marking means are able to uniformly perform the marking of an elementary cell of dimension dx along the axis Ox and dy along the axis Oy without encroaching on the neighboring cells
- delimiting, on the turfed area (T), a marking rectangle (R) parallel to said axes Ox, Oy of the coordinate system and defined by its limit coordinates between x₁ and x₂, and between y₁ and y₂, and in which said pattern will be reproduced at the desired scale on the turf and inscribed in said rectangle, reaching, without going beyond, the two sides of the rectangle parallel to the axis Oy of the coordinate system at the respective dimensions x₁ and x₂, and a first side of the rectangle parallel to the x axis at the dimension y₁,
- partitioning the marking rectangle (Q) into a juxtaposition of elementary cells of size dx along the first axis and dy along the second axis of the local coordinate system, said elementary cells being arranged in the form of rows and columns constituting a matrix (M),
- for each marking means, breaking the pattern to be marked down into a mosaic of pixels associated with the elementary cells of the matrix (M) and with the marking means in question,
- determining, for each elementary cell of the matrix, the task to be performed by each marking means according to the value of the pixel associated with said elementary cell for the marking means in question and to mark the pattern to be marked on the marking area,
- moving the vehicle (V) over the turfed area along a path allowing all of the elementary cells to be covered,
- determining or measuring, in real time and in the local coordinate system, the position and orientation of the vehicle (V) as it moves over the turf, by means of a locating device
- controlling the marking means according to the measured position and orientation of the vehicle so as to continually adjust the operation of the marking means according to the tasks to be performed in each elementary cell of the matrix (M) and perform said tasks to be performed in each elementary cell in the matrix (M), the method being **characterized in that**
- the dimension y₂ of the second side of the rectangle parallel to the axis Ox is calculated according to the height-to-width ratio of the pattern to be reproduced and such that, on the one hand, the size Y = y₂ - y₁ of the sides parallel to y of said rectangle is a multiple of dy and that, on the other hand, said pattern, if it were reproduced with the exact height-to-width ratio of the pattern to be reproduced, would have a length Y = y₂ - y₁ + r with r smaller than dy
- the height-to-width ratio of the pattern to be reproduced is adjusted by disregarding the remainder r calculated previously so that the adjusted image fits exactly in the marking rectangle (Q) of surface X. Y where X = x2 - x1, delimited in the preceding step, the distortion due to the adjustment being very low insofar as r is smaller than dy and as dy is itself very small with respect to the length Y = y₂ - y₁ of the rectangle.

2. - The method as claimed in claim 1, **characterized in that** it comprises the following additional steps:
- having a device for automatically controlling the vehicle and controlling it according to the measurement of the position and orientation of the vehicle so as to continually adjust the path in order to cover the marking rectangle parallel either to the axis Ox or to the axis Oy,
- checking that all of the elementary cells of the matrix have been treated,
- for as long as all of the elementary cells of the matrix have not been treated, controlling the vehicle to move it over the marking area.

3. - The method as claimed in either of claims 1 and 2, **characterized in that** it further comprises the following steps:
- determining the coordinates X_{A}, Y_{A}, Z_{A} of a target observation point (A) in the local coordinate system,
- selecting a planar source pattern,
- determining the pattern to be marked according to the source pattern in order to compensate for a distortion due to the relative position of the target observation point (A) with respect to the marking area (Q), such that an image of the pattern to be marked viewed from said target observation point (A) is substantially identical to an image of the source pattern which would be laid flat at turf level but on a tangent horizontal plane and the vertical projection of which on the turf would correspond to the limits of the marking area and which would be viewed from a source observation point located vertically in line with the center of the marking area, at a height from which the complete image is viewed at the same solid angle as from said target observation point (A).

4. - The method as claimed in either of claims 1 and 2, **characterized in that** it further comprises the following steps:
- determining the coordinates M, Y_{A}, Z_{A} of a target observation point (A) in the defined local coordinate system, which includes three axes;
- determining the altimetric shape z(x, y) of the turf surface of the marking area;
- selecting a planar source pattern;
- calculating the pattern to be marked according to the source pattern in order to compensate for a distortion due to the relative position of the target observation point with respect to the marking area and due to the altimetric shape z(x, y) of the turfed surface, such that this image of the pattern to be marked on the field is the same as that obtained by projecting the source pattern on the marking area using a light projection means positioned at the exact location of the target observation point.

5. - The method as claimed in claim 4, **characterized in that** the true altimetric shape z(x, y) is replaced by a simplified parametric shape z'(x, y) proposed by default from among:
- a horizontal plane z = constant
- a parametric roof shape described by the coordinates of the ridge and the pitch of the roof as %,
- a single pitch described by its pitch as % and its pitch line.

6. - The method as claimed in any one of claims 1 to 5, **characterized in that** the step of measuring the position and orientation of the vehicle (V) in the local coordinate system is performed by means of an optical telemetry device including a laser source emitting from the point of origin (0) of the local coordinate system and a reflecting tracking prism located on said vehicle (V).

7. - The method as claimed in any one of claims 1 to 6, **characterized in that** the vehicle moves parallel either to the axis Ox or the axis Oy.

8. - The method as claimed in any one of claims 1 to 7, **characterized in that** the marking means consist of compressed air nozzles that make it possible to bend the leaves or blades of grass in one direction or another, and of rollers, arranged after said nozzles in the direction of travel of the vehicle (V), to fix the orientation of the leaves or blades of grass.
